# FASCICULE DE BREVET EUROPEEN

(11) **EP 3 688 311 B1**
(45) Date de publication et mention de la délivrance du brevet: **09.03.2022**
(21) Numéro de dépôt: 18782110.3
(22) Date de dépôt: 12.09.2018
(51) Int. Cl.: F04D 25/08, F04D 29/66, H02K 5/20, H02K 9/06, H02K 7/14, H02K 5/24, H02K 11/33

(54) **PULSEUR D'AIR POUR VEHICULE AUTOMOBILE ET DISPOSITIF DE CLIMATISATION ASSOCIÉ**
LUFTGEBLÄSE FÜR KRAFTFAHRZEUG UND ZUGEHÖRIGE KLIMAANLAGE
AIR BLOWER FOR AUTOMOTIVE VEHICLE AND ASSOCIATED AIR CONDITIONING DEVICE

(30) Priorité: 26.09.2017 FR 1758908
(43) Date de publication de la demande: 05.08.2020
(73) Titulaire: Valeo Systemes Thermiques, 78322 Le Mesnil Saint-Denis Cedex (FR)
(72) Inventeur: BEDE, Sophie, 78322 Le Mesnil Saint-Denis Cedex (FR); CAPOULUN, Geoffroy, 78322 Le Mesnil Saint-Denis Cedex (FR); HESSELMANN, Alexander, 78322 Le Mesnil Saint-Denis Cedex (DE); BROSSERON, Laurent, 78322 Le Mesnil Saint-Denis Cedex (FR); CHERIAUX, Olivier, 78322 Le Mesnil Saint-Denis Cedex (FR)
(74) Mandataire: Valeo Systèmes Thermiques
(86) Numéro de dépôt international: PCT/FR2018/052225
(87) Numéro de publication internationale: WO 2019/063905

(56) Documents cités:
- CH-A- 243 506
- FR-A1- 2 804 554
- FR-A1- 2 983 262
- GB-A- 1 031 646
- JP-U- S63 105 467

## Description

### DOMAINE TECHNIQUE DE L'INVENTION

La présente invention concerne un pulseur d'air pour dispositif de chauffage, ventilation et/ou climatisation pour véhicule automobile.

Elle trouve une application particulière, mais non limitative dans les véhicules automobiles.

### ARRIÈRE-PLAN TECHNOLOGIQUE DE L'INVENTION

Un pulseur d'air pour dispositif de chauffage, ventilation et/ou climatisation pour véhicule automobile, connu de l'homme du métier comprend :
- un moteur électrique sur lequel est montée une roue ;
- ladite roue adaptée pour engendrer un flux d'air principal dans ledit dispositif de chauffage, ventilation et/ou climatisation ;
- un support moteur comprenant :
   - une bague extérieure adaptée pour être fixée sur le dispositif de chauffage, ventilation et/ou climatisation ;
   - une bague intérieure dans laquelle est logé ledit moteur électrique ;
   - un canal d'air qui s'étend de la bague extérieure vers ladite bague intérieure et dans lequel le flux d'air peut circuler ;
   - un dispositif de découplage vibro-acoustique disposé entre ladite bague extérieure et ladite bague intérieure.

Le dispositif de découplage vibro-acoustique est adapté pour éviter que des vibrations dues à la rotation du moteur électrique et de la roue ne soient transmises à ladite bague extérieure et par conséquent au dispositif de chauffage, ventilation et/ou climatisation. Il comprend des plots qui sont disposés régulièrement tout autour de la bague intérieure.

Un inconvénient de cet état de la technique est que le canal d'air créé une asymétrie autour de la bague intérieure et une certaine rigidité sur le dispositif de découplage vibro-acoustique ce qui entraîne que malgré la présence du dispositif de découplage vibro-acoustique, des vibrations du moteur électrique et de la roue se propagent quand même via ledit canal d'air au dispositif de chauffage, ventilation et/ou climatisation. Ces vibrations sont ressenties jusqu'au volant du véhicule automobile.

Le document FR2983262 A1 divulgue un pulseur d'air selon le préambule de la revendication 1.

Dans ce contexte, la présente invention vise à proposer une solution alternative à l'état de la technique précédemment mentionné.

### DESCRIPTION GENERALE DE L'INVENTION

A cette fin, l'invention propose un pulseur d'air pour dispositif de chauffage, ventilation et/ou climatisation pour véhicule automobile, selon la revendication 1.

Ainsi, comme on va le voir en détail ci-après, le fait d'avoir une partie flexible va amener de l'élasticité audit canal d'air ce qui va compenser l'asymétrie créée par ledit canal d'air et réduire la rigidité au niveau du canal d'air.

Selon des modes de réalisation non limitatifs, le pulseur d'air peut comporter en outre une ou plusieurs caractéristiques supplémentaires parmi les suivantes :
Selon un mode de réalisation non limitatif, ladite partie flexible est située entre ladite bague extérieure et ladite bague intérieure. Cela permet de réaliser un découplage vibro-acoustique entre la bague intérieure la bague extérieure.

Selon un mode de réalisation non limitatif, ledit pulseur d'air comprend en outre un déflecteur adapté pour être disposé autour de ladite bague extérieure et pour délimiter en partie ledit canal d'air. Dans un mode de réalisation non limitatif, le déflecteur et la bague extérieure ne forment qu'une seule pièce. Dans ce cas, ladite pièce est appelée bague extérieure.

Le déflecteur permet d'accrocher le pulseur d'air à un dispositif de chauffage, ventilation et/ou climatisation. Par ailleurs, il permet d'apporter de l'air pour refroidir le moteur électrique et l'électronique du pulseur d'air via le canal d'air qu'il délimite en partie.

Selon l'invention, ladite partie flexible dudit canal d'air est en forme d'accordéon (ou de soufflet). C'est une manière simple de réaliser une partie flexible.

Selon un mode de réalisation non limitatif, ladite partie flexible dudit canal d'air est adaptée pour se déplacer radialement lorsque ledit flux d'air secondaire issu dudit flux d'air principal circule dans ledit canal d'air.

Selon un mode de réalisation non limitatif, ladite partie flexible dudit canal d'air est adaptée pour être au repos lorsqu'aucun flux d'air secondaire issu dudit flux d'air principal ne circule dans ledit canal d'air. Elle est ainsi relâchée.

Selon un mode de réalisation non limitatif, ledit pulseur d'air comprend en outre une membrane d'étanchéité qui prolonge ledit canal d'air et selon lequel ladite partie flexible dudit canal d'air fait partie de ladite membrane. La membrane d'étanchéité permet ainsi de réaliser deux fonctions différentes, à savoir l'étanchéité et l'absorption des vibrations.

Selon un mode de réalisation non limitatif, lequel ladite partie flexible dudit canal d'air est en matériau thermoplastique élastomère. Cela permet d'apporter la flexibilité.

Selon un mode de réalisation non limitatif, ledit matériau thermoplastique élastomère est du SEBS. C'est un matériau peu coûteux.

Selon un mode de réalisation non limitatif, le dispositif de découplage vibro-acoustique et la partie flexible dudit canal d'air sont surmoulés en une seule pièce. Cela est simple à réaliser. Par ailleurs, cela permet une meilleure étanchéité. En outre, cela réduit le nombre de références de pièces à gérer et cela permet un gain en terme de temps de cycle car il y a moins d'étapes d'assemblage. Enfin, cela permet d'avoir un produit plus robuste, il n'y a en effet pas de modes de défaillances dus à des problèmes d'assemblage.

Selon un mode de réalisation non limitatif, la bague intérieure comprend au moins un doigt anti-basculement. Cela empêche le dispositif vibro-acoustique de casser et la membrane de se déchirer lorsqu'il y a trop de vibrations.

Selon un mode de réalisation non limitatif, le déflecteur comprend en outre au moins deux pions adaptés pour appuyer sur un doigt anti-basculement de la bague intérieure. Cela permet de le maintenir.

Il est en outre proposé un dispositif de climatisation, ventilation et/ou chauffage pour véhicule automobile comprenant un pulseur d'air selon l'une quelconque des caractéristiques précédentes.

### BREVE DESCRIPTION DES FIGURES

L'invention et ses différentes applications seront mieux comprises à la lecture de la description qui suit et à l'examen des figures qui l'accompagnent :
- la figure 1 représente schématiquement un dispositif de chauffage, ventilation, et/ou climatisation comprenant un pulseur d'air selon un mode de réalisation non limitatif de l'invention ;
- la figure 2 représente une vue en perspective du pulseur d'air sans volute de la figure 1 assemblé selon un mode de réalisation non limitatif de l'invention, ledit pulseur d'air comprenant un moteur électrique, une roue, un support moteur et un module de commande avec un capot de protection ;
- la figure 3 représente la vue de la figure 2 sans capot de protection selon un mode de réalisation non limitatif ;
- la figure 4 représente une vue éclatée du support moteur du pulseur d'air de la figure 2 selon un mode de réalisation non limitatif ;
- la figure 5 représente une vue en perspective d'un déflecteur du pulseur d'air de la figure 2 ;
- la figure 6 représente une vue de dessus du support moteur du pulseur d'air de la figure 4 sans dispositif vibro-acoustique, selon un mode de réalisation non limitatif, ledit support moteur délimitant une seconde partie d'un canal d'air ;
- la figure 7 représente une vue de dessus du support moteur de la figure 4 avec un dispositif vibro-acoustique, selon un mode de réalisation non limitatif ;
- la figure 8 représente une vue en perspective du support moteur de la figure 7 selon un mode de réalisation non limitatif ;
- la figure 9 représente une vue en coupe d'une partie du support moteur de la figure 7 ;
- la figure 10a est un schéma d'une première variante de réalisation non limitative d'un premier mode de réalisation non limitatif d'une partie du canal d'air du support moteur des figures 6 à 9 lorsqu'aucun flux secondaire ne circule ; et
- la figure 10b est un schéma de la partie du canal d'air du support moteur de la figure 10a lorsqu'un flux secondaire circule.

### DESCRIPTION DE MODES DE REALISATION DE L'INVENTION

Les éléments identiques, par structure ou par fonction, apparaissant sur différentes figures conservent, sauf précision contraire, les mêmes références.

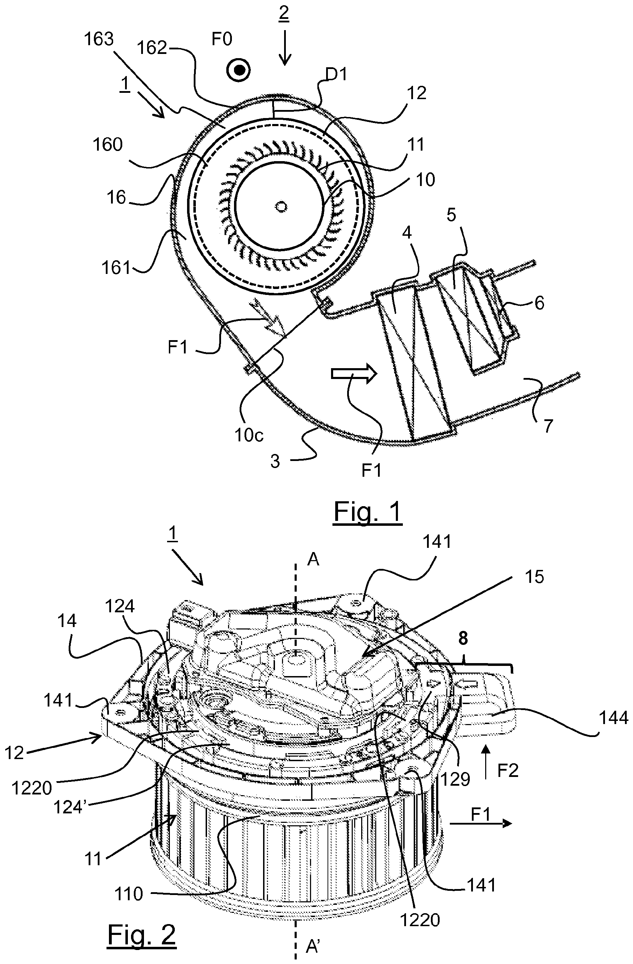

Le pulseur d'air 1 pour véhicule automobile est décrit en référence aux figures 1 à 10b selon un mode de réalisation non limitatif.

Par véhicule automobile, on entend tout type de véhicule motorisé.

Dans un mode de réalisation non limitatif, un pulseur d'air 1 est utilisé dans un dispositif de climatisation, ventilation et/ou chauffage 2, appelé en anglais HVAC « Heating Ventilation and Air Conditioning », pour véhicule automobile.

Dans la suite de la description, le dispositif de climatisation, ventilation et/ou chauffage 2 est également appelé dispositif HVAC.

Le dispositif HVAC est illustré schématiquement sur la figure 1. Il comprend :
- un pulseur d'air 1 délivrant un flux d'air F1 dans un canal d'air 3 ;
- ledit canal d'air 3 ;
- un évaporateur 4 d'un circuit de réfrigération (lorsque la fonction climatisation est présente) disposé dans le canal d'air 3 ;
- un dissipateur thermique 5 échangeur de chaleur à liquide disposé dans le canal d'air 3 et parcouru par un liquide de refroidissement du moteur électrique du véhicule automobile ; et
- optionnellement un dissipateur thermique électrique additionnel 6 disposé dans le canal d'air 3.

Par la suite, le flux d'air F1 sera également appelé flux d'air principal F1.

En mode climatisation, le flux d'air F1 est dévié dans un passage 7 en dérivation du dissipateur thermique 5. En aval des dissipateurs thermiques 5 et 6, le canal d'air 3 distribue le flux d'air F1 vers des bouches de sortie dans l'habitacle du véhicule automobile. La distribution et optionnellement le mixage du flux d'air F1 se font à l'aide de volets commandés (non illustrés). Le mixage permet la régulation en température du flux d'air F1 avant la distribution dans l'habitacle. La distribution et le mixage étant connus de l'homme du métier, ils ne sont pas décrits ici.

Dans la suite de la description, le canal d'air 3 est également appelé canal d'air principal 3.

Dans un premier mode de réalisation non limitatif illustré sur la figure 1, le dispositif HVAC comprend en outre une volute 16 et le pulseur d'air 1 ne comprend pas ladite volute 16.

Dans un deuxième mode de réalisation non limitatif non illustré, le dispositif HVAC comprend une partie de la volute 16 et le pulseur d'air 1 comprend une partie de la volute 16. En particulier, le support moteur 12 (décrit plus loin) du pulseur d'air 1 est conformé de sorte à définir une partie de la volute 16 qui est complémentaire de l'autre partie de la volute 16 comprise dans le dispositif HVAC. Le support moteur 12 comprend ainsi une paroi qui est la partie de la volute 16 complémentaire à l'autre partie de la volute 16 comprise dans le dispositif HVAC. Cette partie de volute 16 complémentaire étant connue de l'homme du métier, elle n'est pas décrite ici.

La figure 2 illustre un pulseur d'air 1 du dispositif HVAC sans volute 16 selon un mode de réalisation non limitatif en vue assemblée et en vue éclatée.

Le pulseur d'air 1 comporte :
- un moteur électrique 10 (illustré sur la figure 1) sur lequel est montée une roue 11 ;
- ladite roue 11 adaptée pour engendrer un flux d'air principal F1 dans ledit dispositif HVAC ;
- un support moteur 12 dans lequel est logé ledit moteur électrique 10 et comprenant un canal d'air 8 dans lequel un flux d'air secondaire F2 issu du flux d'air principal F1 est adapté pour circuler. C'est un canal d'air de refroidissement adapté pour refroidir le moteur électrique 10 et un module de commande 18. Ce canal d'air 8 est par la suite appelé également canal d'air secondaire 8.

Dans un mode de réalisation non limitatif, le pulseur d'air 1 comprend en outre un module de commande 18 recouvert par un capot de protection 15.

Dans un mode de réalisation non limitatif, le pulseur d'air 1 est disposé sous la planche de bord du véhicule automobile, côté passager.

Les différents éléments du pulseur d'air 1 sont décrits en détail ci-après après la description de la volute 16 ci-dessous.
- Volute 16

La volute 16 est illustrée vue de dessus sur la figure 1.

La volute 16 est une partie fixe dans le pulseur d'air 1. Elle est adaptée pour guider le flux d'air principal F1 dans le dispositif HVAC.

Elle est adaptée pour accueillir la roue 11.

Elle comprend une paroi interne 162. Sur un de ses côtés 161, la volute présente une ouverture 160 (illustrée en pointillée sur la figure 1) dans lequel le support moteur 12 vient se fixer. Le support moteur 12 délimite un logement pour le moteur électrique 10. Le côté opposé (non illustré) au côté 161 présente une ouverture d'admission d'un flux d'air entrant F0. Un flux d'air entrant F0 illustré sur la figure 1 est aspiré axialement dans la volute 16 et est mis en circulation dans la volute 16 pour donner le flux d'air principal F1 et ce dernier est extrait de la volute 10 par une sortie 10c raccordée au canal d'air principal 3. Le canal d'air principal 3 est délimité par la volute 16. Dans un mode de réalisation non limitatif, le débit du flux d'air principal F1 est compris entre 100kg/h et 600kg/h.
- Moteur électrique 10

Le moteur électrique 10 est illustré sur la figure 1.

Il est adapté pour entraîner en rotation la roue 11.

Le moteur électrique 10 fait saillie latéralement sur le côté 161 de la volute 16. Il est logé dans le support moteur 12 et est adapté pour être fixé sur le support moteur 12.

Il comporte un arbre moteur (non illustré) sur lequel est montée la roue 11. L'arbre moteur définit un axe A-A' de rotation de la roue 11 et d'assemblage d'éléments du pulseur d'air 1. Cet axe A-A' est également appelé par la suite axe moteur A-A'. L'arbre moteur est adapté pour s'emmancher dans un moyeu de la roue 11.

Le moteur électrique 10, qui est adapté pour être en mouvement, est fixé à une bague intérieure 124' du support moteur 12 décrit plus loin.

Le moteur électrique 10 comporte en outre :
- un rotor et un stator (non illustrés) ;
- un faisceau de connexions électriques à un module de commande 18, ledit faisceau de connexions électriques comprenant un connecteur pour ladite connexion et permettant l'alimentation du module électrique 10. Ainsi, le moteur électrique 10 est alimenté par une batterie du véhicule automobile via le module de commande 18.

Dans des modes de réalisation non limitatifs, le moteur électrique 10 comprend des bobines ou au moins deux balais (non illustrés).
- Roue 11

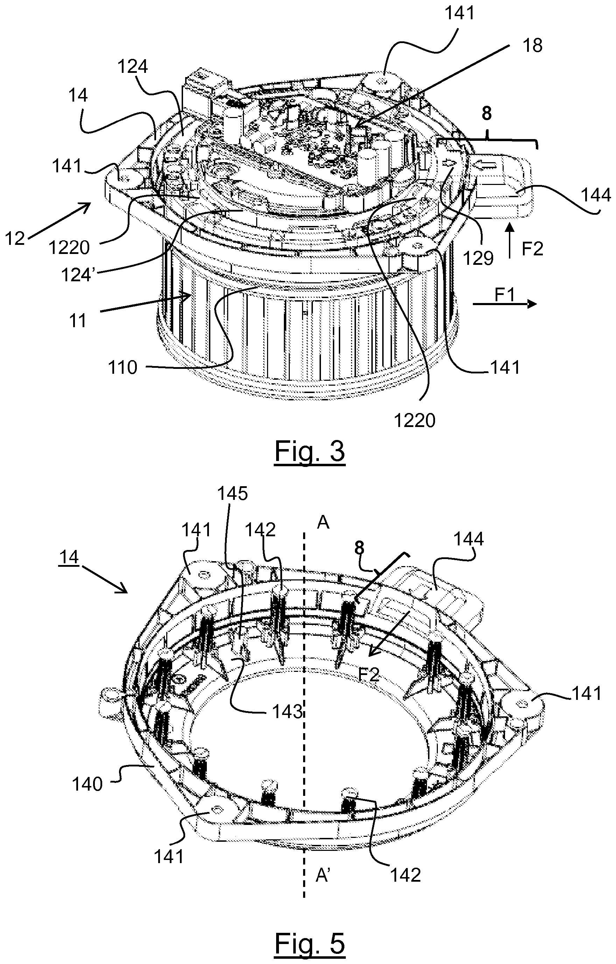

La roue 11 est illustrée sur la figure 1 en vue de dessus et sur les figures 2 et 3 en perspective.

La roue 11 est une partie mobile dans le pulseur d'air 1.

La roue 11 est une roue centrifuge qui est adaptée pour tourner autour de l'axe moteur A-A'. Elle est entraînée en rotation par ledit moteur électrique 10. Elle est adaptée pour aspirer axialement un flux d'air entrant F0 dans la volute 16, le mettre en circulation dans ladite volute 16 et générer le flux d'air principal F1. Ce dernier ressort de la volute 16 de façon radiale, à savoir orthogonal à l'axe moteur A-A'.

La roue 11 est logée à l'intérieur de la volute 16. Elle comprend une périphérie 110.

La roue 11 est montée sur le moteur électrique 10. La roue 11 et le moteur électrique 10 sont coaxiaux selon l'axe moteur A-A'. Cela permet de maximiser la compacité de l'ensemble.

On notera que lorsque la roue 11 tourne elle produit également des vibrations. Les vibrations produites sont amplifiées par le dispositif de découplage vibro-acoustique.
- Module de commande 18

Le module de commande 18 est illustré sur la figure 3.

Dans des modes de réalisation connus de l'homme du métier, le module de commande 18 est implanté dans le corps même de ladite volute 16, dans le support moteur 12 côté extérieur dudit support moteur 12, sur le support moteur 12, ou encore à distance du support moteur 12. Dans l'exemple non limitatif illustré, il est disposé sur le support moteur 12 au-dessus du moteur électrique 10.

Dans un mode de réalisation non limitatif, le module de commande 18 comprend une carte à circuit imprimé appelée PCBA (« Printed Circuit Board Assembly » en anglais) sur laquelle sont disposés des composants électroniques. On notera que la carte PCBA est simple face ou double face, à savoir elle comporte des composants électroniques sur une seule face ou sur les deux faces. Le module de commande 18 est adapté pour piloter le moteur électrique 10 du pulseur d'air 1. A partir d'une consigne de puissance, le module de commande 18 régule la vitesse du moteur électrique 10 pour obtenir la puissance désirée. Ladite régulation s'effectue via le pilotage du courant dans ledit moteur électrique 10. A cet effet, le module de commande 18 comprend des éléments de pilotage qui sont des interrupteurs tels que dans un exemple non limitatif des transistors MOSFET et qui sont adaptés pour piloter le courant dans ledit moteur électrique 10. Un tel pilotage étant connu de l'homme du métier, il n'est pas décrit ici.

Le fonctionnement d'un moteur électrique 10 étant également connu de l'homme du métier, il n'est pas décrit ici.

Le module de commande 18 est recouvert par un capot de protection 15 illustré sur la figure 2. Dans un mode de réalisation non limitatif, ce dernier est en métal.
- Support moteur 12

Le support moteur 12 est illustré sur les figures 2 à 9.

Il est adapté pour s'insérer dans l'ouverture 160 située du côté 161 de la volute 16 et se fixer sur ladite volute 16. Il n'est pas fermé.

Dans un mode de réalisation non limitatif, le support moteur 12 est coaxial avec le moteur électrique 10 et la roue 11. Il n'est pas désaxé par rapport à la roue 11 ce qui permet de maximiser la compacité de l'ensemble.

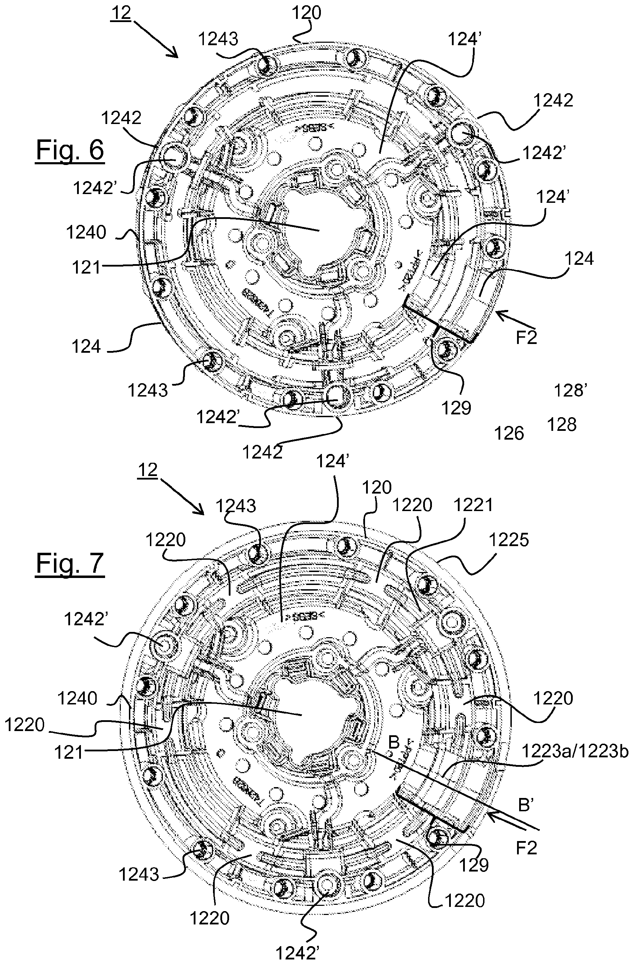

Le support moteur 12 comporte une périphérie 120 (illustrée sur la figure 6) qui est supérieure à la périphérie 110 de la roue 11. Cela permet de recouvrir axialement la roue 11 et d'assembler l'ensemble roue 11- support moteur 12 sur la volute 16.

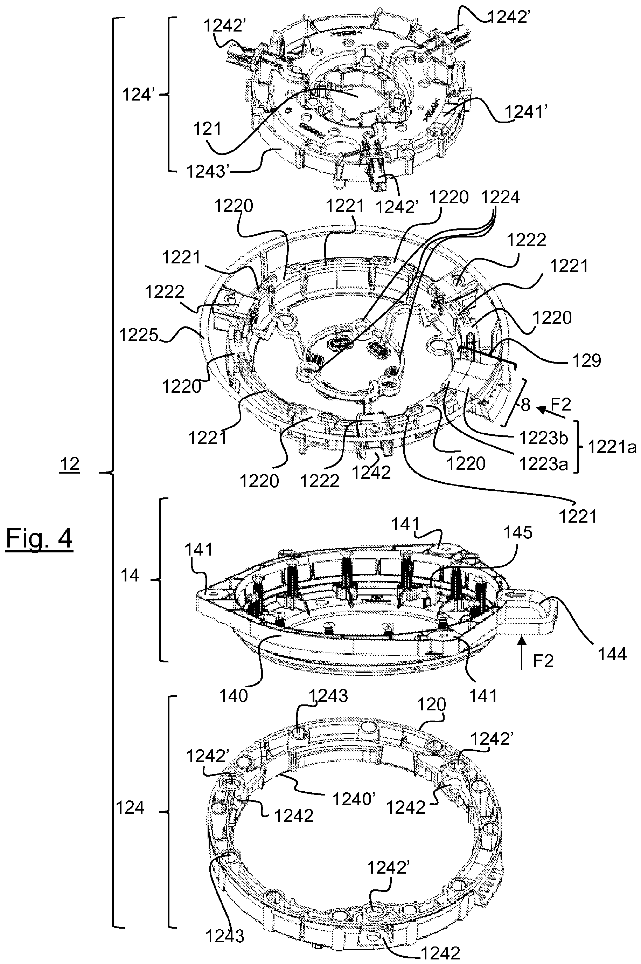

Tel qu'illustré sur les figures 4 à 8, selon l'invention, le support moteur 12 comprend :
- un logement 121 adapté pour accueillir le moteur électrique 10, en particulier le stator et le faisceau de connexions électriques ;
- une bague extérieure 124 délimitée par une périphérie 120 ;
- une bague intérieure 124' de diamètre inférieur à la bague extérieure 124. Ladite bague intérieure 124' permet d'enserrer ledit moteur électrique 10 de sorte à le retenir en translation et en rotation par rapport au support moteur 12.

Le support moteur 12 est ouvert des deux côtés de sorte à :
- pouvoir monter le moteur électrique 10 dans son logement 121 ;
- laisser dépasser d'un côté 125 les balais ou les bobines du moteur électrique 10 par rapport à la bague extérieure 124 du support moteur 12 ; et
- laisser dépasser de l'autre côté 125' l'arbre moteur par rapport à la base cylindrique intérieure 1240' (illustrée sur la figure 4) de la bague extérieure 124.

Comme on va le voir plus loin, une partie de la bague intérieure 124' et de la bague extérieure 124 forment une partie du canal d'air secondaire 8. La partie de la bague intérieure 124' comprend à une de ses extrémités 1243' des orifices pour laisser passer le flux d'air secondaire F2 qui circule dans le canal d'air secondaire 8 de sorte que ledit flux d'air secondaire F2 vienne en contact avec le moteur électrique 10 (en particulier ses bobines ou ses balais) et le module de commande 18 pour les refroidir.

Dans un mode de réalisation non limitatif illustré sur la figure 4, la bague intérieure 124' comprend au moins un doigt anti-basculement 1242' adapté pour empêcher le dispositif vibro-acoustique 1220 de casser et la membrane de se déchirer lorsqu'il y a trop de vibrations. Le doigt anti-basculement 1242' fait saillie radialement par rapport à la périphérie 1243' de la bague intérieure 124' vers l'extérieur. Dans un exemple non limitatif, la bague intérieure 124' comprend trois doigts anti-basculement 1242'.

Dans un mode de réalisation non limitatif illustré sur la figure 4, la bague extérieure 124 comprend au moins une fente d'insertion 1242 dans laquelle un doigt anti-basculement 1242' peut s'insérer. La fente d'insertion 1242 est radiale. Un orifice 1242' traverse ladite fente d'insertion 1242 de façon axiale. Cet orifice 1242' est adapté pour accueillir au moins un pion du déflecteur 14 décrit ci-après.
o Déflecteur 14

Dans un mode de réalisation non limitatif illustré sur les figures 3 à 5, le support moteur 12 comprend en outre un déflecteur 14 adapté pour accrocher le pulseur d'air 1 au dispositif HVAC. Le déflecteur 14 peut être modifié en fonction du type de dispositif HVAC sur lequel le pulseur d'air est accosté. Ainsi, au lieu de changer la conception de toutes les autres pièces du pulseur d'air 1 en fonction du type de dispositif HVAC, seul le déflecteur 14 est modifié, les autres pièces pouvant être standard pour tout type de dispositif HVAC.

Le déflecteur 14 est adapté pour se positionner autour de la bague extérieure 124. Dans un mode de réalisation non limitatif, le déflecteur 14 est en matériau plastique.

Dans un mode de réalisation non limitatif, le déflecteur 14 et la bague extérieure 124 ne forment qu'une seule pièce. Dans ce cas, ladite pièce est appelée bague extérieure.

Le déflecteur 14 comprend au moins un dispositif d'accroche primaire 141 adapté pour accrocher le pulseur d'air 1 au dispositif HVAC. Dans un exemple non limitatif, il comprend trois dispositifs d'accroche primaire 141. Dans un mode de réalisation non limitatif illustré, le dispositif d'accroche primaire 141 est une patte adaptée pour recevoir des vis de fixation. Dans un autre mode de réalisation non illustré, le dispositif d'accroche primaire 141 est à baïonnettes. Il permet d'effectuer une fixation par translation et rotation d'un quart de tour du support moteur 12 sur le côté 161 de la volute 16.

Le déflecteur 14 comprend au moins un dispositif d'accroche secondaire 142 adapté pour accrocher ledit déflecteur 14 sur la bague extérieure 124. Dans un mode de réalisation non limitatif, le déflecteur 14 comprend une pluralité de dispositifs d'accroche secondaires 142 répartis tout autour sur la base cylindrique intérieure 143. Ils sont adaptés pour s'insérer en force dans des orifices 1243 de la bague extérieure 124 prévus à cet effet. Dans un exemple non limitatif illustré, il y a douze dispositifs d'accroche secondaires 142. Dans un mode de réalisation non limitatif, le déflecteur 14 comprend en outre au moins deux pions 145 adaptés pour appuyer sur un doigt anti-basculement 1242' de la bague intérieure 124' au travers d'un orifice 1242' axial (décrit précédemment) d'une fente d'insertion 1242 de la bague extérieure 124 s'il y a des vibrations trop importantes. Les deux pions 145 appuient sur et sous le doigt anti-basculement 1242'. Dans une variante de réalisation non limitative, le déflecteur 14 comprend trois pions espacés d'environ 120° l'un de l'autre. Sur les figures 4 et 5, un seul pion 145 est illustré.

Le déflecteur 14 délimite en partie le canal d'air secondaire 8. A cet effet, tel qu'illustré sur la figure 5, il comprend une partie 144 qui définit une première partie du canal d'air secondaire 8.

Ladite première partie 144 fait en partie saillie radialement par rapport à la périphérie 140 du déflecteur 14. Elle se prolonge radialement jusqu'au bord de ladite périphérie 140. Elle comprend ainsi une base orthogonale à l'axe moteur A-A'.

La première partie 144 est ouverte (à savoir sa base est ouverte) de sorte que le flux d'air secondaire F2 qui est issu du flux d'air principal F1 puisse arriver dans ladite première partie 144. Le flux d'air secondaire F2 arrive ainsi de façon axiale dans cette première partie 144. Il est ainsi orthogonal au flux d'air principal F1 au départ.

La première partie 144 est agencée de sorte que le flux d'air secondaire F2 ressorte de ladite première partie 144 de façon sensiblement orthogonale à l'axe moteur A-A', à savoir de façon sensiblement parallèle au flux d'air principal F1 tel qu'illustré sur la figure 5. Ainsi, lorsque le flux d'air secondaire F2 circule dans la première partie 144, il rentre de façon axiale, effectue un virage à sensiblement 90° pour ressortir de façon radiale.
o Dispositifs d'étanchéité 1224, 1225

Dans un mode de réalisation non limitatif illustré sur la figure 4, le support moteur 12 comprend en outre un dispositif d'étanchéité primaire 1224 pour des connecteurs électriques entre le module de commande 18 et des phases du moteur électrique 10.

Dans un mode de réalisation non limitatif illustré sur la figure 4, le support moteur 12 comprend en outre un dispositif d'étanchéité secondaire 1225 pour assurer l'étanchéité entre la bague extérieure 124 et le déflecteur 14. Le dispositif d'étanchéité secondaire 1225 est disposé autour de la bague extérieure 124.

Dans un mode de réalisation non limitatif les dispositifs d'étanchéité primaire 1224 et secondaire 1225 sont en thermoplastique élastomère.
o Dispositif d'accueil 1222

Dans un mode de réalisation non limitatif illustré sur la figure 4, le support moteur 12 comprend en outre des dispositifs d'accueil 1222 pour recevoir les doigts anti-basculement 1242' de la bague intérieure 124'. Dans un exemple non limitatif, il y a trois dispositifs d'accueil 1222. Les dispositifs d'accueil 1222 s'étendent radialement de la membrane intérieure 1221 jusqu'au dispositif d'étanchéité secondaire 1225.
o Dispositif de découplage vibro-acoustique 1220

Selon l'invention, le support moteur 12 comprend en outre un dispositif de découplage vibro-acoustique 1220 illustré sur les figures 4, 7 et 8 disposé entre la bague intérieure 124' et la bague extérieure 124 du support moteur 12 et adapté pour éviter que les vibrations dues à la rotation du moteur électrique 10 et de la roue 11 ne soient transmises à ladite bague extérieure 124 et par conséquent au dispositif HVAC. On notera que si ces vibrations se propagent, elles peuvent se ressentir jusqu'au volant du véhicule automobile.

Dans un mode de réalisation non limitatif, le dispositif de découplage vibro-acoustique 1220 est composé de plots.

Le support moteur 12 comprend en outre une membrane d'étanchéité 1221 (illustrée sur les figures 2 et 5). Les plots 1220 sont reliés par ladite membrane d'étanchéité 1221. La membrane 1221 participe ainsi au découplage vibro-acoustique entre la bague intérieure 124' et la bague extérieure 124.

Les plots 1220 sont adaptés pour absorber les vibrations du moteur électrique 10 et de la roue 11 au niveau radial. Les plots 1220 sont disposés entre ladite bague extérieure 124 et ladite bague intérieure 124'. Dans un exemple non limitatif illustré, il y a six plots 1220.

Dans un mode de réalisation non limitatif, les plots 1220 sont en thermoplastique élastomère (TPE). Dans une variante de réalisation non limitative, le thermoplastique élastomère est du SEBS (polystyrène-b-poly(éthylène-butylène)-b-polystyrène). Dans un mode de réalisation non limitatif, le SEBS comprend une rigidité comprise entre 20 et 40 shores.
o Membrane d'étanchéité 1221

Dans un mode de réalisation non limitation, le support moteur 12 comprend en outre une membrane d'étanchéité 1221 illustrée sur les figures 4 et 7 à 9. La membrane d'étanchéité 1221 du dispositif de découplage vibro-acoustique 1220 est disposée entre ladite bague extérieure 124 et ladite bague intérieure 124'. Elle est adaptée pour étanchéifier le support moteur 12 contre les infiltrations de poussière ou d'eau.

La membrane d'étanchéité 1221 relie les plots 1220 entre eux et entoure ainsi la bague intérieure 124' du support moteur 12.

Dans un mode de réalisation non limitation, le dispositif de découplage vibro-acoustique 1220 et ladite membrane d'étanchéité 1221 ne forment qu'une seule pièce tel qu'illustré sur la figure 4. Ils sont surmoulés en une seule pièce.

Tel qu'illustré sur les figures 6 à 9, et conformément à l'invention, le support moteur 12 est adapté pour délimiter en partie le canal d'air secondaire 8, à savoir une seconde partie 129 dudit canal d'air secondaire 8. Dans un mode de réalisation non limitatif, cette seconde partie 129 est sensiblement orthogonale à l'axe moteur A-A'

Cette seconde partie 129 est formée par une partie de la bague intérieure 124' et une partie de la bague extérieure 124 et dans un mode de réalisation non limitatif une partie (1223a-1223b décrite plus loin) de la membrane d'étanchéité 1221.

Le canal d'air secondaire 8 est adapté pour dériver à partir d'un flux d'air principal F1 un flux d'air secondaire F2 de sorte que ce dernier puisse refroidir le moteur électrique 10 (ses balais ou bobines) ainsi que le module de commande 18.

Le flux d'air secondaire F2 circule dans cette seconde partie 129 du canal d'air secondaire 8 de façon perpendiculaire à l'axe moteur A-A' du moteur électrique 10 tel qu'illustré sur les figures 2 à 9. Il circule donc de façon radiale. Il est ainsi parallèle au flux d'air principal F1.

Dans un mode de réalisation non limitatif, le flux d'air secondaire F2 comporte un débit d'air de 10kg/h.

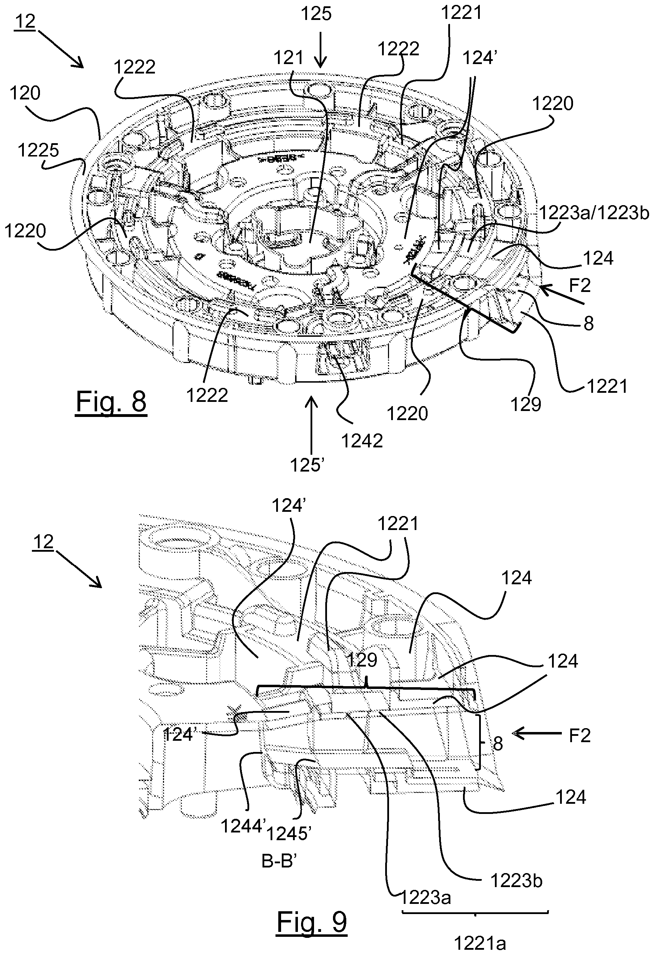

Tel qu'illustré sur la coupe de la figure 9, la membrane d'étanchéité 1221 est adaptée pour s'insérer en partie dans la bague extérieure 124 et prolonge ledit canal d'air secondaire 8 pour former une partie dudit canal d'air secondaire 8. La bague extérieure 124 entoure ainsi en partie la membrane d'étanchéité 1221 qui prolonge le canal d'air secondaire 8.

Le canal d'air secondaire 8 est ainsi formé en partie (à savoir sa seconde partie 129) par une partie de la membrane d'étanchéité 1221, une partie de la bague intérieure 124' et une partie de la bague extérieure 124, celle qui entoure en partie la membrane d'étanchéité 1221 qui prolonge le canal d'air secondaire 8. L'autre partie du canal secondaire 8 est formé par la première partie 144 décrite précédemment.

La membrane d'étanchéité 1221 se prolonge au-delà de la bague extérieure 124 tel qu'illustré sur la figure 8. En particulier elle se prolonge dans la première partie 144 du canal d'air secondaire 8. Cela permet d'étanchéifier la jonction entre la seconde partie 129 et la première partie 144 du canal d'air secondaire 8.

La membrane d'étanchéité 1221 comprend une partie flexible 1221a tel qu'illustré sur la figure 9. Elle est située entre la bague extérieure 124 et la bague intérieure 124'.

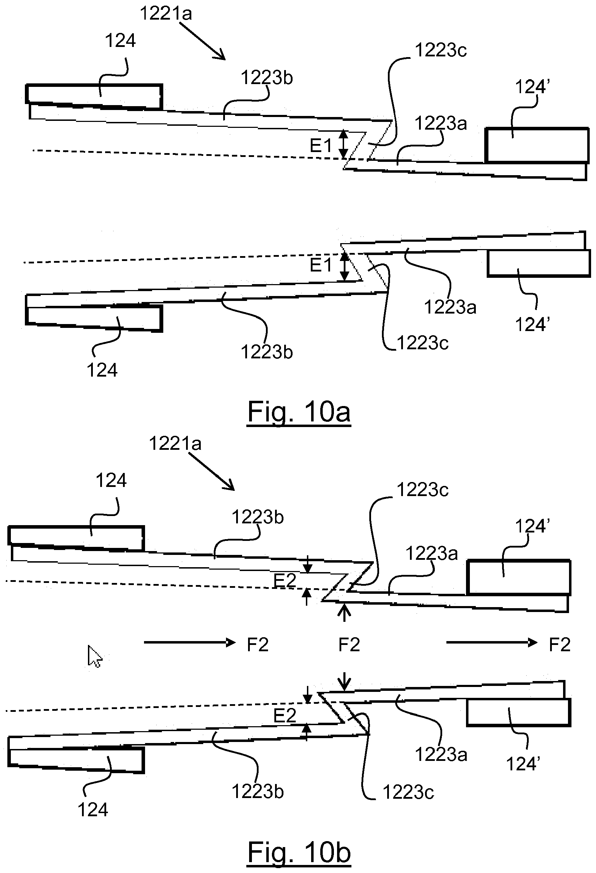

Dans un mode de réalisation non limitatif, la partie flexible 1221a comprend elle-même deux parties illustrées sur les figures 9, 10a et 10b, à savoir :
- une partie primaire 1223a qui est adaptée pour être en contact avec la bague intérieure 124' de l'embase 14' ;
- une partie secondaire 1223b qui est adaptée pour être en contact avec la bague extérieure 124.

La partie primaire 1223a et la partie secondaire 1223b sont reliées par une jonction 1223c tel qu'illustré sur les figures 10a et 10b.

Tel qu'illustré sur la figure 7, ces deux parties 1223a et 1223b forment ainsi en partie le canal d'air secondaire 8. Grâce à ces deux parties 1223a et 1223b, il existe un découplage entre la bague intérieure 124' et la bague extérieure 124.

On notera que l'extrémité 1244' illustrée sur la figure 9 de la bague intérieure 124' qui comprend les orifices pour laisser passer le flux d'air secondaire F2 est opposée à l'extrémité 1245' qui est en contact avec la membrane 1221 (et plus particulièrement avec la partie primaire 1223a).

Dans un mode de réalisation non limitatif, la partie flexible 1221a est surmoulée en une seule pièce avec les plots 1220.

Dans un mode de réalisation non limitatif, la partie flexible 1221a est surmoulée avec la bague intérieure 124' et la bague extérieure 124.

Dans un mode de réalisation non limitatif, la partie flexible 1211a dudit canal d'air secondaire 8 est en matériau thermoplastique élastomère, à savoir les deux parties 1223a, 1223b de la membrane d'étanchéité 1221.

Dans une variante de réalisation non limitative, le thermoplastique élastomère est du SEBS. Dans un mode de réalisation non limitatif, le SEBS comprend une rigidité comprise entre 20 et 40 shores. Le SEBS est peu coûteux.

Les figures 10a et 10b sont des schémas en coupe selon un axe B-B' (illustré sur la figure 5) de la partie flexible 1221a formée par les deux parties 1223a et 1223b selon des modes de réalisation non limitatifs.

Tel qu'illustré sur les figures 10a et 10b, et conformément à l'invention, la partie flexible 1221a du canal d'air secondaire 8 qui fait partie de la membrane d'étanchéité 1221 est en forme d'accordéon. Plus particulièrement, les deux parties 1223a et 1223b forment ledit accordéon.

L'accordéon est adapté pour être au repos, être compressé ou être étiré. L'accordéon apporte la flexibilité. Au repos, l'accordéon n'est ni contraint en extension, ni contraint en compression. L'accordéon permet de mieux absorber les vibrations. En effet, il permet d'avoir un degré de liberté selon un axe d'extension de l'accordéon, à savoir selon l'axe longitudinal, et d'avoir deux degrés de liberté transversalement à l'axe longitudinal, à savoir selon un plan orthogonal à cet axe longitudinal. Les vibrations peuvent être ainsi absorbées selon ces trois degrés de liberté.

Tel qu'illustré sur la figure 10a, l'accordéon est au repos (ou relâché). Les deux parties 1223a et 1223b sont distantes d'une distance primaire E1 lorsqu'aucun flux d'air secondaire F2 ne circule dans le canal d'air secondaire 8. La jonction 1223c est détendue.

Ainsi, la partie flexible 1221a du canal d'air secondaire 8 est au repos (ou relâchée) lorsqu'aucun flux d'air secondaire F2 ne circule.

Tel qu'illustré sur la figure 10b, l'accordéon se déplace au niveau radial et se contracte lorsqu'un flux d'air secondaire F2 circule. Il est ainsi compressé. Les deux parties 1223a et 1223b sont adaptées pour se rapprocher lorsqu'un flux d'air secondaire F2 circule dans le canal d'air secondaire 8. Elles sont alors distantes d'une distance secondaire E2 inférieure à la distance primaire E1.

Le flux d'air secondaire F2 créé une surpression de sorte que la jonction 1223c est contrainte radialement et la partie secondaire 1223b se rapproche de la partie primaire 1223a.

On notera que le sens du flux d'air F2 va de la partie secondaire 1223b vers la partie primaire 1223a puisqu'il arrive de la bague extérieure 124 pour se diriger vers la bague intérieure 124'.

Ainsi, la partie flexible 1221a du canal d'air secondaire 8 se déplace radialement lorsqu'un flux d'air secondaire F2 circule de sorte à absorber les vibrations qui arrivent au niveau du canal d'air secondaire 8.

On notera qu'un coulisseau (non illustré) définit les formes du surmoulage de la partie flexible 1221a, à savoir des deux parties 1223a et 1223b qui forment l'accordéon. Le démoulage par le coulisseau s'effectue de la bague intérieure 124' vers la bague extérieure 124.

Ainsi, le fait d'avoir rendu flexible une partie du canal d'air secondaire 8 (en particulier la membrane d'étanchéité 1221 qui prolonge ledit canal d'air secondaire 8 dans le mode de réalisation non limitatif décrit), grâce à la forme en accordéon, permet de réduire la rigidité créée sur l'ensemble du dispositif vibro-acoustique 1220-membrane 1221 du fait de l'asymétrie créée par le canal d'air secondaire 8. Le dispositif de découplage vibro-acoustique 1220 n'est ainsi plus perturbé par la présence dudit canal d'air secondaire 8. Par conséquent, cela permet d'améliorer le découplage vibro-acoustique. Les vibrations ne se transmettent plus au niveau du canal secondaire 8. La partie flexible 1221a permet de créer de l'élasticité au niveau du canal d'air secondaire 8 entre la bague intérieure 124' et la bague extérieure 124 du support moteur 12, ce qui permet d'absorber les vibrations. Les vibrations du moteur électrique 10 et de la roue 11 se répartissent alors de manière homogène et sont absorbées de manière homogène par le dispositif de découplage vibro-acoustique 1220. Les vibrations dues au moteur électrique 10 et à la roue 11 qui se transmettent à la bague intérieure 124' ne sont ainsi plus transmises à la bague extérieure 124. Elles ne se propagent ainsi plus vers le dispositif HVAC ni vers le volant du véhicule automobile.

Ainsi, on réduit les vibrations ressenties au niveau du volant du véhicule automobile d'environ 20% par rapport à l'état de la technique antérieur qui comprend un canal d'air secondaire 8 continu. On réduit ainsi également le bruit dans le véhicule automobile.

Bien entendu la description de l'invention n'est pas limitée aux modes de réalisation décrits ci-dessus, l'invention étant définie par les revendications.

Ainsi, dans un mode de réalisation non limitatif, le support moteur 12 ne comprend pas de membrane 1221. Dans ce cas, le canal d'air secondaire 8 est formé par une première partie 144 appartenant au déflecteur 14 et par une seconde partie 129 appartenant en partie à la bague extérieure 124 et en partie à la bague intérieure 124'. Et, les deux parties 1223a et 1223b de la partie flexible 1221a qui forment un accordéon dans le mode de réalisation non limitatif font partie respectivement de la bague intérieure 124' et de la bague extérieure 124 et sont jointes par la jonction 1223c.

Ainsi, l'invention décrite présente notamment les avantages suivants :
- elle limite l'influence du canal secondaire 8 sur le dispositif de découplage vibro-acoustique 1220. L'efficacité de ce dernier n'est ainsi pas limité par l'asymétrie créée par ledit canal secondaire 8 ;
- elle permet d'améliorer le découplage vibro-acoustique établi par le dispositif de découplage vibro-acoustique 1220, en particulier au niveau du canal d'air secondaire 8, car elle évite une propagation des vibrations de la bague intérieure 124' vers la bague extérieure 124 au niveau du canal d'air secondaire 8 ;
- elle permet d'éviter que les vibrations produites par la roue 11 qui sont amplifiées par le dispositif de découplage vibro-acoustique 1120 ne se propagent également et ne créent une gêne dans le véhicule automobile.

## Revendications

1. Pulseur d'air (1) pour dispositif de chauffage, ventilation et/ou climatisation (2) pour véhicule automobile, selon lequel ledit pulseur d'air (1) comprend :
- un moteur électrique (10) sur lequel est montée une roue (11) ;
- ladite roue (11) adaptée pour engendrer un flux d'air principal (F1) dans ledit dispositif de chauffage, ventilation et/ou climatisation (2) ;
- un support moteur (12) comprenant :
- une bague extérieure (124) adaptée pour être fixée sur le dispositif de chauffage, ventilation et/ou climatisation (2) ;
- une bague intérieure (124') dans laquelle est logé ledit moteur électrique (10) ;
- un canal d'air (8) qui s'étend de la bague extérieure (124) vers ladite bague intérieure (124') dans lequel un flux d'air secondaire (F2) issu dudit flux d'air principal (F1) peut circuler, ledit canal d'air (8) comprenant une partie flexible (1221a) ;
- un dispositif de découplage vibro-acoustique (1220) disposé entre ladite bague extérieure (124) et ladite bague intérieure (124'),
ledit pulseur d'air étant **caractérisé en ce que** la partie flexible (1221a) dudit canal d'air (8) est en forme d'accordéon.

2. Pulseur d'air (1) selon la revendication 1, selon lequel ladite partie flexible (1221a) est située entre ladite bague extérieure (124) et ladite bague intérieure (124').

3. Pulseur d'air (1) selon l'une quelconque des revendications précédentes 1 à 2, selon lequel ladite partie flexible (1221a) dudit canal d'air (8) est adaptée pour se déplacer radialement relativement au canal d'air et se contracter lorsque ledit flux d'air secondaire (F2) circule dans ledit canal d'air (8).

4. Pulseur d'air (1) selon l'une quelconque des revendications précédentes 1 à 3, selon lequel ladite partie flexible (1221a) dudit canal d'air (8) est adaptée pour être au repos lorsqu'aucun flux d'air secondaire (F2) ne circule dans ledit canal d'air (8).

5. Pulseur d'air (1) selon l'une quelconque des revendications précédentes 1 à 4, selon lequel ledit pulseur d'air (1) comprend en outre une membrane d'étanchéité (1221) qui prolonge ledit canal d'air (8) et selon lequel ladite partie flexible (1221a) dudit canal d'air (8) fait partie de ladite membrane (1221).

6. Pulseur d'air (1) selon l'une quelconque des revendications précédentes 1 à 5, selon lequel ladite partie flexible (1221a) dudit canal d'air (8) est en matériau thermoplastique élastomère.

7. Pulseur d'air (1) selon la revendication 6, selon lequel ledit matériau thermoplastique élastomère est du SEBS.

8. Pulseur d'air (1) selon l'une quelconque des revendications précédentes 1 à 7, selon lequel le dispositif de découplage vibro-acoustique (1220) et ladite partie flexible (1221a) dudit canal d'air (8) sont surmoulés en une seule pièce.

9. Dispositif de climatisation, ventilation et/ou chauffage (2) pour véhicule automobile comprenant un pulseur d'air (1) selon l'une quelconque des revendications 1 à 8.

## Patentansprüche

1. Luftgebläse (1) für eine Heizungs-, Belüftungs-und/oder Klimatisierungseinrichtung (2) für ein Kraftfahrzeug, wobei das Luftgebläse (1) umfasst:
- einen Elektromotor (10), an welchem ein Rad (11) angebracht ist;
- wobei das Rad (11) dafür ausgelegt ist, einen Hauptluftstrom (F1) in der Heizungs-, Belüftungs-und/oder Klimatisierungseinrichtung (2) zu erzeugen;
- eine Motorhalterung (12), welche umfasst:
- einen äußeren Ring (124), der dafür ausgelegt ist, an der Heizungs-, Belüftungs- und/oder Klimatisierungseinrichtung (2) befestigt zu werden;
- einen inneren Ring (124'), in welchem der Elektromotor (10) aufgenommen ist;
- einen Luftkanal (8), welcher sich vom äußeren Ring (124) in Richtung des inneren Ringes (124') erstreckt und in welchem ein Sekundärluftstrom (F2), der vom Hauptluftstrom (F1) ausgeht, strömen kann, wobei der Luftkanal (8) einen flexiblen Teil (1221a) umfasst;
- eine Vorrichtung zur vibroakustischen Entkopplung (1220), die zwischen dem äußeren Ring (124) und dem inneren Ring (124') angeordnet ist,
wobei das Luftgebläse **dadurch gekennzeichnet ist, dass** der flexible Teil (1221a) des Luftkanals (8) ziehharmonikaförmig ist.

2. Luftgebläse (1) nach Anspruch 1, wobei sich der flexible Teil (1221a) des Luftkanals (8) zwischen dem äußeren Ring (124) und dem inneren Ring (124') befindet.

3. Luftgebläse (1) nach einem der vorhergehenden Ansprüche 1 bis 2, wobei der flexible Teil (1221a) des Luftkanals (8) dafür ausgelegt ist, sich bezüglich des Luftkanals radial zu bewegen und sich zusammenzuziehen, wenn der Sekundärluftstrom (F2) im Luftkanal (8) strömt.

4. Luftgebläse (1) nach einem der vorhergehenden Ansprüche 1 bis 3, wobei der flexible Teil (1221a) des Luftkanals (8) dafür ausgelegt ist, sich im Ruhezustand zu befinden, wenn kein Sekundärluftstrom (F2) im Luftkanal (8) strömt.

5. Luftgebläse (1) nach einem der vorhergehenden Ansprüche 1 bis 4, wobei das Luftgebläse (1) außerdem eine Dichtungsmembran (1221) umfasst, welche den Luftkanal (8) verlängert, und wobei der flexible Teil (1221a) des Luftkanals (8) Teil der Membran (1221) ist.

6. Luftgebläse (1) nach einem der vorhergehenden Ansprüche 1 bis 5, wobei der flexible Teil (1221a) des Luftkanals (8) aus thermoplastischem Elastomermaterial besteht.

7. Luftgebläse (1) nach Anspruch 6, wobei das thermoplastische Elastomermaterial SEBS ist.

8. Luftgebläse (1) nach einem der vorhergehenden Ansprüche 1 bis 7, wobei die Vorrichtung zur vibroakustischen Entkopplung (1220) und der flexible Teil (1221a) des Luftkanals (8) in einem Stück geformt sind.

9. Klimatisierungs-, Belüftungs- und/oder Heizungseinrichtung (2) für ein Kraftfahrzeug, welche ein Luftgebläse (1) nach einem der Ansprüche 1 bis 8 umfasst.

## Claims

1. Air blower (1) for a heating, ventilation and/or air-conditioning device (2) for a motor vehicle, according to which said air blower (1) comprises:
- an electric motor (10) on which is mounted a wheel (11);
- said wheel (11) designed to generate a main air stream (F1) in said heating, ventilation and/or air-conditioning device (2);
- a motor holder (12) comprising:
- an outer ring (124) designed to be fixed to the heating, ventilation and/or air-conditioning device (2) ;
- an inner ring (124') in which is housed said electric motor (10);
- an air channel (8) which extends from the outer ring (124) towards said inner ring (124') in which a secondary air stream (F2) derived from said main air stream (F1) can circulate, said air channel (8) comprising a flexible part (1221a);
- a vibro-acoustic decoupling device (1220) disposed between said outer ring (124) and said inner ring (124'),
said air blower being **characterized in that** the flexible part (1221a) of said air channel (8) is in accordion form.

2. Air blower (1) according to Claim 1, according to which said flexible part (1221a) is situated between said outer ring (124) and said inner ring (124').

3. Air blower (1) according to either one of the preceding Claims 1 and 2, according to which said flexible part (1221a) of said air channel (8) is designed to be displaced radially relative to the air channel and to contract when said secondary air stream (F2) circulates in said air channel (8).

4. Air blower (1) according to any one of the preceding Claims 1 to 3, according to which said flexible part (1221a) of said air channel (8) is designed to be at rest when no secondary air stream (F2) circulates in said air channel (8).

5. Air blower (1) according to any one of the preceding Claims 1 to 4, according to which said air blower (1) further comprises a sealing membrane (1221) which prolongs said air channel (8) and according to which said flexible part (1221a) of said air channel (8) forms part of said membrane (1221).

6. Air blower (1) according to any one of the preceding Claims 1 to 5, according to which said flexible part (1221a) of said air channel (8) is made of elastomer thermoplastic material.

7. Air blower (1) according to Claim 6, according to which said elastomer thermoplastic material is SEBS.

8. Air blower (1) according to any one of the preceding Claims 1 to 7, according to which the vibro-acoustic decoupling device (1220) and said flexible part (1221a) of said air channel (8) are overmoulded in a single piece.

9. Air-conditioning, ventilation and/or heating device (2) for a motor vehicle comprising an air blower (1) according to any one of Claims 1 to 8.
